# EUROPEAN PATENT SPECIFICATION

(11) **EP 2 815 311 B1**
(45) Date of publication and mention of the grant of the patent: **27.03.2019**
(21) Application number: 13748693.2
(22) Date of filing: 13.02.2013
(51) Int. Cl.: G06F 8/65

(54) **USING AN APPLICATION CACHE TO UPDATE RESOURCES OF INSTALLED APPLICATIONS**
VERWENDUNG EINES ANWENDUNGSZWISCHENSPEICHERS ZUR AKTUALISIERUNG DER RESSOURCEN VON INSTALLIERTEN ANWENDUNGEN
UTILISATION D'UN CACHE D'APPLICATION POUR MISE À JOUR DE RESSOURCES D'APPLICATIONS INSTALLÉES

(30) Priority: 16.02.2012 US 201213398321
(43) Date of publication of application: 24.12.2014
(73) Proprietor: Microsoft Technology Licensing, LLC, Redmond, WA 98052 (US)
(72) Inventor: HILERIO, Israel, Redmond, Washington 98052-6399 (US); WINKLER, David Vaughn, Redmond, Washington 98052-6399 (US); THORNTON, Daniel R., Redmond, Washington 98052-6399 (US); COX, Matthew R., Redmond, Washington 98052-6399 (US); BATEMAN, Adrian Robert, Redmond, Washington 98052-6399 (US); MCGATHA, Jesse D., Redmond, Washington 98052-6399 (US); ANDERSON, Karen Elizabeth Parker, Redmond, Washington 98052-6399 (US)
(74) Representative: Goddar, Heinz J.
(86) International application number: PCT/US2013/025795
(87) International publication number: WO 2013/122965

(56) References cited:
- US-A1- 2004 237 083
- US-A1- 2006 031 833
- US-A1- 2010 318 967
- US-A1- 2011 119 447
- Simon Facciol: "Multi-platform mobile application development using HTML5", , 1 June 2011 (2011-06-01), XP055203356, Retrieved from the Internet: URL:http://www.simonfacciol.info/wp-conten t/uploads/2012/12/Multi-platform-mobile-ap plication-development-using-HTML5-JavaScri pt-and-CSS3.pdf [retrieved on 2015-07-20]
- Anonymous: "Cache manifest in HTML5 - Wikipedia, the free encyclopedia", , 19 January 2012 (2012-01-19), XP055203582, Retrieved from the Internet: URL:https://web.archive.org/web/2012011918 4123/http://en.wikipedia.org/wiki/Cache_ma nifest_in_HTML5 [retrieved on 2015-07-21]
- Eric Bidelman: "A Beginner's Guide to Using the Application Cache", HTML5 Rocks Tutorials, 27 May 2011 (2011-05-27), pages 1-6, XP055052006, Retrieved from the Internet: URL:http://www.html5rocks.com/en/tutorials /appcache/beginner/ [retrieved on 2013-02-01]
- MACKENZIE D: "Introducing Client Application Deployment with ClickOnce", INTERNET CITATION, 31 October 2003 (2003-10-31), XP002368256, Retrieved from the Internet: URL:http://web.archive.org/web/20040606082 539/msdn.microsoft.com/library/en-us/dnwin forms/html/clickonce.asp [retrieved on 2006-02-16]

## Description

### BACKGROUND

Existing computing environments typically force users to update their applications before new content can be used offline. That is, if an application has updates available, the user typically has to become knowledgeable of the updates and physically navigate to a remote application store to obtain and install the updates before using the new content.

### SUMMARY

This Summary is provided to introduce a selection of concepts in a simplified form that are further described below in the Detailed Description. This Summary is not intended to identify key features or essential features of the claimed subject matter.

Various embodiments enable installable applications that are to be used on a local client machine to utilize an application cache manifest file that resides remotely, on the web, to define various resources that are to be updated and available offline after the installed application has been deployed on the local client machine. Installed applications can be considered as self-contained applications that run in their own environment and do not depend on or run in the Web browser. Whenever the content of the manifest file is updated on the web, the installed application automatically updates its local application cache resources and allows the installed application to use those resources offline. This is done without having to install a new update of the application or burden the user with having to navigate to a location to obtain the updated content.

Simon Facciol: "Multi-platform mobile application development using HTML5", 1 June 2011, describes offline HTML5 mobile Web applications which make use of a manifest file stored on the web server of the website which points to the web application resources and further include downloading resources, caching them locally and providing using application cache when a user navigates to the application, regardless of the connection status.

"Cache manifest in HTML5 - Wikipedia, the free encyclopedia", 19 January 2012, describes using a cache manifest in HTML5 to provide the ability to access a web application even without a network connection.

Internet article "Introducing Client Application Deployment with ClickOne", publised October 2003 by Microsoft Developer Network, describes using an installation manifest file for application installation and a deployment manifest filed holding version information of an updated application assembly provided in a separate folder.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.
FIG. 1 is an illustration of an environment in an example implementation that is operable to perform the various embodiments described herein.
FIG. 2 depicts an example implementation that can utilize an installed application in accordance with one or more embodiments.
FIG. 3 illustrates aspects of an example process in accordance with one or more embodiments
FIG. 4 is a flow diagram that describes steps in a method in accordance with one or more embodiments.
FIG. 5 illustrates an example system that includes the computing device as described with reference to FIG. 1.
FIG. 6 illustrates various components of an example device that can be implemented as any type of computing device as described herein.

### DETAILED DESCRIPTION

### Overview

Various embodiments enable installable applications that are to be used on a local client machine to utilize an application cache manifest file that resides remotely, on the web, to define various resources, e.g., pictures, media, scripts, CSS style sheets, HTML and the like, that are to be updated and available offline after the installed application has been deployed on the local client machine. Installed applications can be considered as self-contained applications that run in their own environment and do not depend on or run in the Web browser. To this end, installed applications, in the context of this document, are not web browsers. Rather, installed applications can utilize and leverage markup-based content such as, by way of example and not limitation, ScaleForm, XUI (Xbox UI), HTML, XAML and the like. Installed applications are typically targeted to a specific application experience that utilizes HTML and/or other web technologies to provide the user experience, including the user interface that is utilized by the user to interact with their installed application. Whenever the content of the manifest file is updated on the web, the installed application automatically updates its local application cache resources and allows the installed application to use those resources offline. Checking for updated content can take place immediately upon deployment, asynchronously following deployment, or can happen at first execution, or at every execution. This is done without having to install a new update of the application or burden the user with having to navigate to a location (e.g. an Application Store) to obtain the updated content.

In the following discussion, an example environment is first described that may employ the techniques described herein. Example procedures are then described which may be performed in the example environment as well as other environments. Consequently, performance of the example procedures is not the network limited to the example environment and the example environment is not limited to performance of the example procedures.

### Example Environment

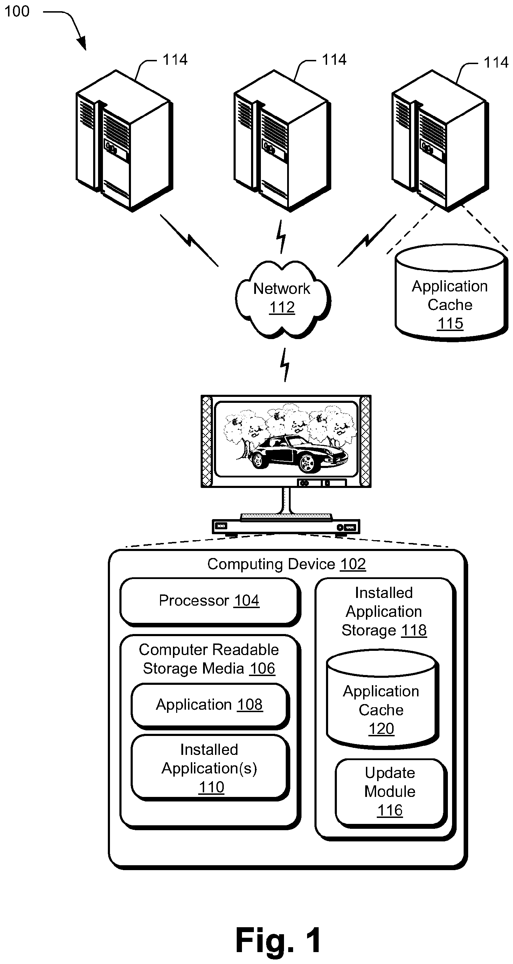

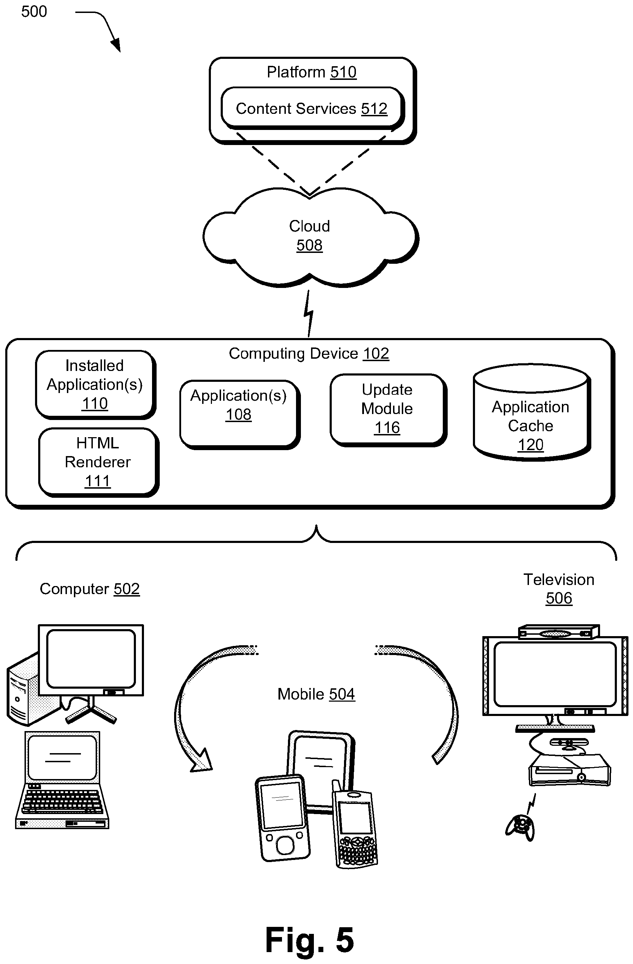

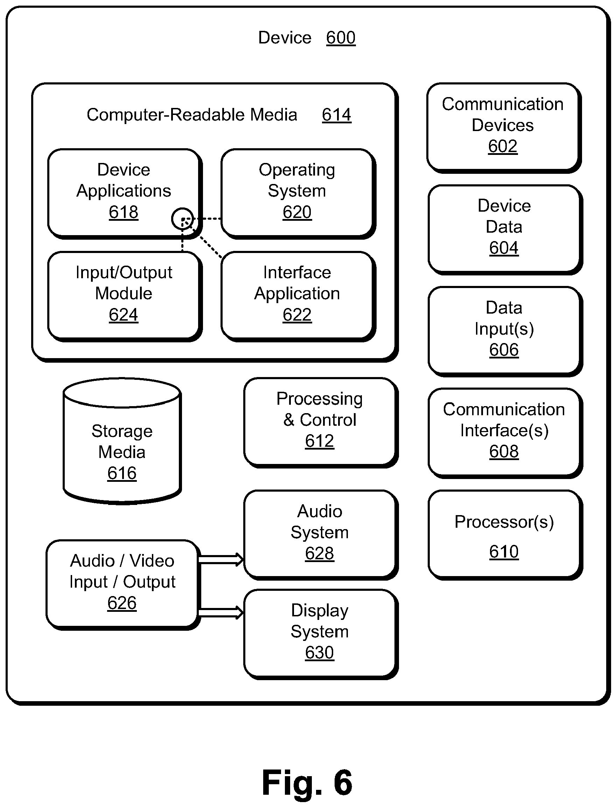

FIG. 1 illustrates an operating environment in accordance with one or more embodiments, generally at 100. Environment 100 includes a computing device 102 (also referred to as a "local client machine") having one or more processors 104, one or more computer-readable storage media 106, one or more applications 108 and one or more installed applications 110 that reside on the computer-readable storage media and which are executable by the processor 104. Computing device 102 can be embodied as any suitable computing device such as, by way of example and not limitation, a desktop computer, a portable computer, a handheld computer such as a personal digital assistant (PDA), mobile phone, television, tablet computer, and the like. One of a variety of different examples of a computing device 102 is shown and described below in FIGS. 5 and 6.

Applications 108 can include any suitable type of applications including, by way of example and not limitation, a web browser. The web browser is configured to navigate via the network 112. Although the network 112 is illustrated as the Internet, the network may assume a wide variety of configurations. For example, the network 112 may include a wide area network (WAN), a local area network (LAN), a wireless network, a public telephone network, an intranet, and so on. Further, although a single network 112 is shown, the network 112 may be configured to include multiple networks.

The browser, for instance, may be configured to navigate via the network 112 to interact with content available from one or more web servers 114 as well as communicate data to the one or more web servers 114, e.g., perform downloads and uploads. The web servers 114 may be configured to provide one or more services that are accessible via the network 112. Examples of such services include email, web pages, photo sharing sites, social networks, content sharing services, media streaming services, and so on.

One or more of the applications 108 may also be configured to access the network 112, e.g., directly themselves and/or through the browser 110. For example, one or more of the applications 108 may be configured to communicate messages, such as email, instant messages, and so on. In additional examples, an application 108, for instance, may be configured to access a social network, obtain weather updates, interact with a bookstore service implemented by one or more of the web servers 114, support word processing, provide spreadsheet functionality, support creation and output of presentations, and so on.

Thus, applications 108 may also be configured for a variety of functionality that may involve direct or indirect network 112 access. For instance, the applications 108 may include configuration settings and other data that may be leveraged locally by the application 108 as well as synchronized with applications that are executed on another computing device. In this way, these settings may be shared by the devices. A variety of other instances are also contemplated. Thus, the computing device 102 may interact with content in a variety of ways from a variety of different sources.

Installed application(s) 110, separate and independent from web browsers, are representative of application functionality that may periodically have access to the web and be usable in online and offline scenarios. Installed applications typically run off of the local client machine where the local client machine acts as the site of origin for the web application. Installed applications are updatable when the local client machine is connected to the web. In the context of this document, installed applications can be considered as self-contained applications that run in their own environment and do not depend on or run in the Web browser. In at least some contexts, installed applications can be considered as webpages that are installed as applications on computing device 102 and rendered inside a dedicated application hosting executable program code or software. One specific type of installed application is a Metro style application or app. Such applications can use JavaScript and can be built with the technologies of the web including HTML, CSS, JavaScript and others that are mentioned above. Unlike a web site, a Metro style app using JavaScript is not deployed page-by-page from a web server, but rather is installed by a user locally on their machine, in advance of execution, as a package of software.

In addition, computing device 102 includes an installed application storage 118 which, in turn, includes a local application cache 120 and an update module 116 that can be used, in connection with remote application content, to automatically update the local application cache 120 when the computing device 102 is online, as will become apparent below. The application cache 120 is representative of one or more caches that may be used to store data, e.g., resources, obtained from websites, such as audio, video, style sheets, scripts, images, hypertext markup language (HTML) data, and so on that are involved in the generation and display of resources that are used in conjunction with installed applications 110. In one or more implementations, the application cache 120 may be accessed even when a source of corresponding data is unavailable, e.g., a web server 114 that provided the data is offline, lack of a network connection, and so on. In this way, the installed applications 110 may utilize content and resources that are stored locally at the computing device 102 as if the content and resources were obtained via the network connection, thereby providing a seamless user experience.

Generally, any of the functions described herein can be implemented using software, firmware, hardware (e.g., fixed logic circuitry), or a combination of these implementations. The terms "module," "functionality," and "logic" as used herein generally represent software, firmware, hardware, or a combination thereof. In the case of a software implementation, the module, functionality, or logic represents program code that performs specified tasks when executed on a processor (e.g., CPU or CPUs). The program code can be stored in one or more computer readable memory devices. The features of the techniques described below are platform-independent, meaning that the techniques may be implemented on a variety of commercial computing platforms having a variety of processors.

For example, the computing device 102 may also include an entity (e.g., software) that causes hardware or virtual machines of the computing device 102 to perform operations, e.g., processors, functional blocks, and so on. For example, the computing device 102 may include a computer-readable medium that may be configured to maintain instructions that cause the computing device, and more particularly the operating system and associated hardware of the computing device 102 to perform operations. Thus, the instructions function to configure the operating system and associated hardware to perform the operations and in this way result in transformation of the operating system and associated hardware to perform functions. The instructions may be provided by the computer-readable medium to the computing device 102 through a variety of different configurations.

One such configuration of a computer-readable medium is signal bearing medium and thus is configured to transmit the instructions (e.g., as a carrier wave) to the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may use magnetic, optical, and other techniques to store instructions and other data.

Having described an example environment in which the techniques described herein may operate, consider now a discussion of some example embodiments that can utilize the principles described herein.

### Example Embodiments

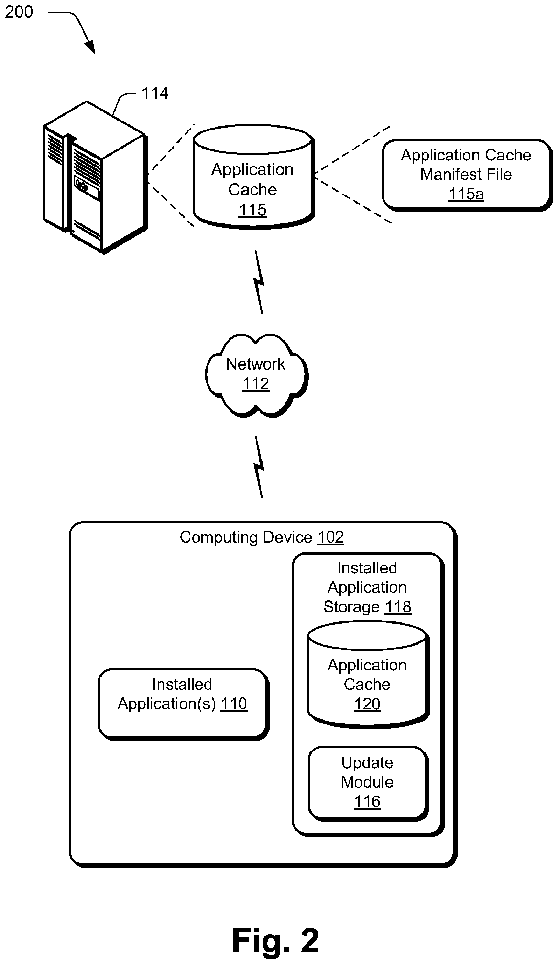

FIG. 2 illustrates some components from FIG. 1 generally at 200, in connection with the following discussion.

In one or more embodiments, installed applications 110 utilize application cache 115 and, more specifically, an application cache manifest file 115a that resides on the web and is accessible via network 112 to define a set of resources that the installed application will be using to display content online, as well as offline. In one or more embodiments, these resources are downloaded the first time the application is used, or the application manifest is updated on the server, and are locally cached in application cache 120 for later use. In a specific implementation, application cache 115 is implemented to be compliant with the W3C HTML5 Application Cache. It is to be appreciated and understood, however, that other cache implementations can be utilized without departing from the spirit and scope of the claimed subject matter.

In this example, once the installable application 110 is installed and the resources have been downloaded and cached, the next time the installed application is used and it wishes to use the resources, the specified resources in the manifest file will be served from the application cache 120 on the computing device 102 and, assuming an online connection, update module 116 will check to see if the manifest file 115a was updated in order to access and retrieve new resources.

For example, assume that later when a developer updates the resources used by the installed application 110 and the manifest file 115a, the installed application 110, through the update module 116, will download those resources to be used either immediately on the first run after installation or the next time the application is started or re-loaded. Afterwards then, when the end user accesses the installed application, the new resources will be used from the application cache 120. This allows the installed applications 110 to display and manipulate new resources (e.g., images, sounds, video, etc.) offline without having to upgrade the application. Further, the user is relieved of having to upgrade the installed application and in some instances, can be uninvolved with the process.

In addition, in at least some embodiments, during installation of an installable application, the application cache manifest file 115a can act as a mechanism to enable download of content from the web that will be processed during the first application run. This allows developers to use the application cache manifest file 115a as a type of configuration tool for their installable applications.

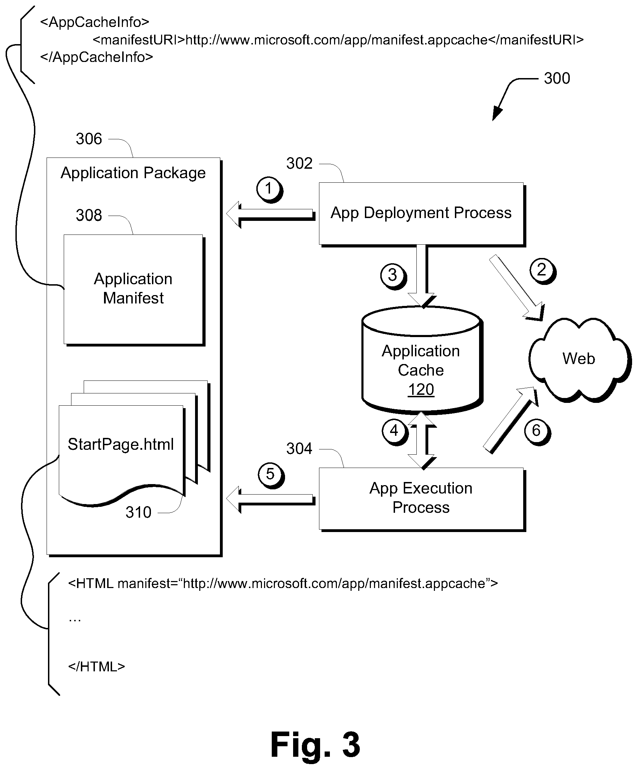

Consider now a specific implementation example in connection with FIG. 3, which illustrates an example process in accordance with one or more embodiments generally at 300.

In this example, there are two separate but related processes -- an application deployment process 302 and an application execution process 304. These processes can be implemented in software that resides on some type of computer-readable medium, such as a computer-readable storage medium. In the illustrated and described example, each installable application has a corresponding application package 306. The application package 306 includes an application manifest 308 and references to markup documents, e.g., web pages 310, that comprise the installable application. The web application manifest 308 contains a resource identifier such as, by way of example and not limitation, a URI that points to the location of the remote application cache manifest file 115a (FIG. 1). The references to webpages 310 include the locations of each of the corresponding webpages (e.g., resources) that comprises the installable application.

The application cache manifest file referenced by the resource identifier in the application manifest 308 is utilized to retrieve all of the resources, during the application deployment process 302, that are to be installed for the first time. Accordingly, during the deployment process, the computing device obtains and reads the application package 306 as indicated at "1". The application manifest 308 is read and utilized to prefetch or download all of the resources or webpages that are utilized by an installable application as indicated at "2". These resources are then stored in the application cache 120 as indicated at "3". Once stored in the application cache 120, the installable or installed application can be utilized in online and offline scenarios during the application execution process 304 described just below.

During application execution process 304, the installed application utilizes the application cache 120 to retrieve all of the locally cached resources that are utilized by the installed application as indicated at "4" and "5". In addition, in the event that there is network connectivity, the application execution process 304 also checks for the existence of an updated application manifest 308 as indicated at "6". This can be done by checking, for example, a timestamp associated with the local application cache manifest file or changes in the content of the application cache, to ascertain whether it shares the same value with the remote application cache manifest file 115a (FIG. 1) that is remotely maintained. If there is an updated version of the remote application cache manifest file, the application execution process 304 can download and use the updated version to download associated resources, as indicated at "6" to create a new version in the application cache 120 as indicated at "4". These newly obtained resources can then be used in the further execution of the installed application.

It is to be appreciated and understood, that the downloading of updated content can take place at the granularity of individual resources. The individual resources can include entire webpages or resources that appear within individual webpages, to name just a few examples. In this manner, downloading of updated content can take place in a manner which obviates having to download a completely new application package. This, in turn, helps to conserve network bandwidth and results in savings for both the local recipient of the content, e.g., metered usage of bandwidth charged by mobile carriers, and for the server operator, in the form of cost for egress.

In at least some embodiments, the application execution process 304 can send a message to the installed application informing the application when the process of updating is complete. In at least some embodiments, the application can notify the user of this new information and switch to the new code and user interface elements in the newly updated cache. Once the switch is complete, the installed application can automatically use the new resources that have been downloaded. This can, in at least some embodiments, enable the user to interact with the most up-to-date version of the installed application and its resources without necessarily having the user physically navigate to a remote location to update the corresponding application via, for example, an application store. That is, the user does not have to be involved in the update process at all. Rather, the update process takes place automatically, behind-the-scenes and, in many instances, is unbeknownst to the user until they are notified of the presence of newly downloaded, updated resources or perceivable elements of the user interface or user functionality are changed, as noted above. This can enable installed applications to behave more like websites by enabling the installed applications to have access to the latest content and to have such content available for consumption in offline scenarios.

With respect to the types of resources that can be downloaded, as described above, such can include, by way of example and not limitation, any suitable type of media (e.g., audiovisual files) or other resources that are typically employed by an installed application, as will be appreciated by the skilled artisan. In at least some embodiments, those types of resources that are downloaded can be limited for various reasons such as, by way of example and not limitation, due to security reasons. For example, resources that include executable script, e.g., JavaScript, may not necessarily be downloaded.

Having considered example embodiments as described above, consider now an example method in accordance with one or more embodiments.

### Example Method

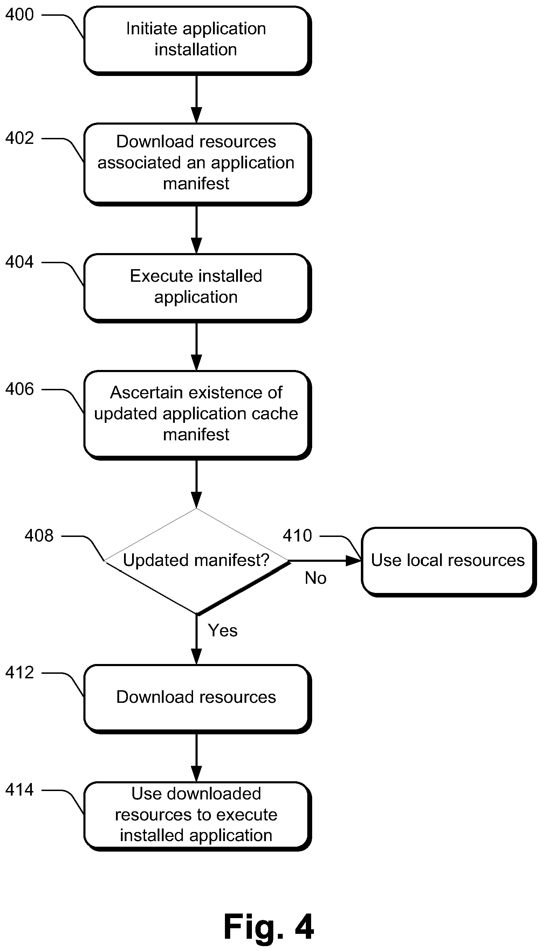

FIG. 4 is a flow diagram that describes steps in a method in accordance with one or more embodiments. The method can be implemented in connection with any suitable hardware, software, firmware, or combination thereof. In at least some embodiments, the method is implemented in software that resides on some form of computer readable storage medium.

Step 400 initiates application installation. This step can be performed in any suitable way. For example, a user can cause an application installation process to be initiated by navigating to a particular website associated with the application, and clicking an "install" link. Alternately or additionally, the application can be installed from an application store. In the illustrated and described embodiment, when an application is installed, the remote application cache, e.g., application cache 115 (FIG. 1), is accessed and the application cache manifest is utilized to ascertain the related resources that are to be downloaded so that the resources can be utilized in both online and offline scenarios. Accordingly, having accessed the application cache manifest, step 402 downloads the resources associated with the installed application. By downloading the resources, the installed application can be available immediately offline after the installation procedure. In at least some embodiments, this step can be performed by using a standard W3C HTML5 Application Cache implementation. Specifically, inside the application cache manifest, there is a section that includes the URI of the HTML5 Application Cache manifest. This is indicated in FIG. 3 in the topmost HTML excerpt. During deployment, the installation mechanism looks for this section and uses the content of the HTML5 Application Cache manifest to prefetch all of the resources. The installation mechanism creates a local application cache storage and stores these resources in the storage, as noted above. Alternately, some implementations may have the deployment mechanism retrieve the HTML5 Application Cache URI from the start page of the installed application and follow the same process, as indicated in the bottommost HTML excerpt in FIG. 3.

Step 404 executes the installed application. When the installed application is executing, it leverages the local application cache to retrieve all of the resources that are to be utilized by the installed application. In addition, if there is network connectivity, step 406 will ascertain the existence of an updated Application Cache manifest. If, at step 408, there is no updated manifest, step 410 uses the previously downloaded local resources to execute the installed application. If, on the other hand, there is an updated manifest, step 412 downloads the resources that have been updated while the application is running. In at least some embodiments, this step can be performed, at least in part, by using the HTML5 Application Cache functionality to check if the manifest content pointed to by the URI in the HTML tag attribute has been modified. An example HTML tag attribute is provided above.

Step 414 uses the downloaded resources to execute the installed application. In one or more embodiments, this can include, by way of example and not limitation, creating a new version of the application cache and sending a message to the installed application informing the installed application when the process is complete. Subsequently, in at least some embodiments, the application can notify the user of this new information and switch to the resources. Once the switch is complete, the user can automatically use the new resources in the installed application. This allows a user, as noted above, to execute the installed application online or offline without losing any part of the experience. Further, as noted above, this process can be performed without having to ask the user to install an update from an application store. This, in turn, enables installed applications to behave more like websites by enabling them to have access to the latest content which can be used in online and offline scenarios.

Having considered an example method in accordance with one or more embodiments, consider now an example system and device that can be utilized to implement the embodiments described above.

### Example System and Device

FIG. 5 illustrates an example system 500 that includes the computing device 102 as described with reference to FIG. 1. The example system 500 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 500, multiple devices are interconnected through a central computing device. The central computing device may be local to the multiple devices or may be located remotely from the multiple devices. In one embodiment, the central computing device may be a cloud of one or more server computers that are connected to the multiple devices through a network, the Internet, or other data communication link. In one embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one embodiment, a class of target devices is created and experiences are tailored to the generic class of devices. A class of devices may be defined by physical features, types of usage, or other common characteristics of the devices.

In various implementations, the computing device 102 may assume a variety of different configurations, such as for computer 502, mobile 504, and television 506 uses. Each of these configurations includes devices that may have generally different constructs and capabilities, and thus the computing device 102 may be configured according to one or more of the different device classes. For instance, the computing device 102 may be implemented as the computer 502 class of a device that includes a personal computer, desktop computer, a multi-screen computer, laptop computer, netbook, and so on. Each of these different configurations may employ the techniques described herein, as illustrated through inclusion of the applications 108, installed applications 110, an HTML Renderer 111, an update module 116 and an application cache 120, as described above. In the illustrated and described embodiment, applications 108 and installed applications 110 are independent hosts of the HTML Renderer 111.

The computing device 102 may also be implemented as the mobile 504 class of device that includes mobile devices, such as a mobile phone, portable music player, portable gaming device, a tablet computer, a multi-screen computer, and so on. The computing device 102 may also be implemented as the television 506 class of device that includes devices having or connected to generally larger screens in casual viewing environments. These devices include televisions, set-top boxes, gaming consoles, and so on. The techniques described herein may be supported by these various configurations of the computing device 102 and are not limited to the specific examples the techniques described herein.

The cloud 508 includes and/or is representative of a platform 510 for content services 512. The platform 510 abstracts underlying functionality of hardware (e.g., servers) and software resources of the cloud 508. The content services 512 may include applications and/or data that can be utilized while computer processing is executed on servers that are remote from the computing device 102. Content services 512 can be provided as a service over the Internet and/or through a subscriber network, such as a cellular or Wi-Fi network.

The platform 510 may abstract resources and functions to connect the computing device 102 with other computing devices. The platform 510 may also serve to abstract scaling of resources to provide a corresponding level of scale to encountered demand for the content services 512 that are implemented via the platform 510. Accordingly, in an interconnected device embodiment, implementation of functionality described herein may be distributed throughout the system 500. For example, the functionality may be implemented in part on the computing device 102 as well as via the platform 510 that abstracts the functionality of the cloud 508.

FIG. 6 illustrates various components of an example device 600 that can be implemented as any type of computing device as described with reference to FIGS. 1, 2, and 5 to implement embodiments of the techniques described herein. Device 600 includes communication devices 602 that enable wired and/or wireless communication of device data 604 (e.g., received data, data that is being received, data scheduled for broadcast, data packets of the data, etc.). The device data 604 or other device content can include configuration settings of the device, media content stored on the device, and/or information associated with a user of the device. Media content stored on device 600 can include any type of audio, video, and/or image data. Device 600 includes one or more data inputs 606 via which any type of data, media content, and/or inputs can be received, such as user-selectable inputs, messages, music, television media content, recorded video content, and any other type of audio, video, and/or image data received from any content and/or data source.

Device 600 also includes communication interfaces 608 that can be implemented as any one or more of a serial and/or parallel interface, a wireless interface, any type of network interface, a modem, and as any other type of communication interface. The communication interfaces 608 provide a connection and/or communication links between device 600 and a communication network by which other electronic, computing, and communication devices communicate data with device 600.

Device 600 includes one or more processors 610 (e.g., any of microprocessors, controllers, and the like) which process various computer-executable instructions to control the operation of device 600 and to implement embodiments of the techniques described herein. Alternatively or in addition, device 600 can be implemented with any one or combination of hardware, firmware, or fixed logic circuitry that is implemented in connection with processing and control circuits which are generally identified at 612. Although not shown, device 600 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

Device 600 also includes computer-readable media 614, such as one or more memory components, examples of which include random access memory (RAM), non-volatile memory (e.g., any one or more of a read-only memory (ROM), flash memory, EPROM, EEPROM, etc.), and a disk storage device. A disk storage device may be implemented as any type of magnetic or optical storage device, such as a hard disk drive, a recordable and/or rewriteable compact disc (CD), any type of a digital versatile disc (DVD), and the like. Device 600 can also include a mass storage media device 616.

Computer-readable media 614 provides data storage mechanisms to store the device data 604, as well as various device applications 618 and any other types of information and/or data related to operational aspects of device 600. For example, an operating system 620 can be maintained as a computer application with the computer-readable media 614 and executed on processors 610. The device applications 618 can include a device manager (e.g., a control application, software application, signal processing and control module, code that is native to a particular device, a hardware abstraction layer for a particular device, etc.). The device applications 618 also include any system components or modules to implement embodiments of the techniques described herein. In this example, the device applications 618 include an interface application 622 and an input/output module 624 that are shown as software modules and/or computer applications. The input/output module 624 is representative of software that is used to provide an interface with a device configured to capture inputs, such as a touchscreen, track pad, camera, microphone, and so on. Alternatively or in addition, the interface application 622 and the input/output module 624 can be implemented as hardware, software, firmware, or any combination thereof. Additionally, the input/output module 624 may be configured to support multiple input devices, such as separate devices to capture visual and audio inputs, respectively.

Device 600 also includes an audio and/or video input-output system 626 that provides audio data to an audio system 628 and/or provides video data to a display system 630. The audio system 628 and/or the display system 630 can include any devices that process, display, and/or otherwise render audio, video, and image data. Video signals and audio signals can be communicated from device 600 to an audio device and/or to a display device via an RF (radio frequency) link, S-video link, composite video link, component video link, DVI (digital video interface), analog audio connection, or other similar communication link. In an embodiment, the audio system 628 and/or the display system 630 are implemented as external components to device 600. Alternatively, the audio system 628 and/or the display system 630 are implemented as integrated components of example device 600.

### Conclusion

Various embodiments enable installed applications that are to be used on a local client machine to utilize an application cache manifest file that resides remotely, on the web, to define various resources that are to be updated and available offline after the installed application has been deployed on the local client machine. Whenever the content of the manifest file is updated on the web, the installed application automatically updates its local application cache resources and allows the installed application to use those resources offline. This is done without having to install a new update of the application or burden the user with having to navigate to a location to obtain the updated content.

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A computer-implemented method comprising:
initiating (400) installation of an installable application on a local computing device, the installable application has a corresponding application package, the application package includes an application manifest;
when the installable application is installed, accessing an application cache and utilizing the application manifest to ascertain resources that are utilized by the installed application;
downloading (402) resources associated with the application manifest associated with the installed application for which the application installation was initiated;
storing downloaded resources in the application cache for use in online and offline scenarios;
ascertaining (406) existence of a remote updated application manifest defining application resources which are to be updated downloading (412), for the installed application, resources that have been updated using the remote updated application manifest; and
using (414) downloaded resources to execute the installed application;
wherein the installed application does not depend on or run in a web browser.

2. The method of claim 1, wherein downloading resources comprises using a W3C HTML5 application cache implementation.

3. The method of claim 1, wherein downloading comprises using an application manifest file referenced by a URI in the application manifest.

4. The method of claim 1, wherein the resources are configured to be used in online and offline scenarios.

5. The method of claim 1, wherein downloading resources comprises downloading one or more markup documents.

6. The method of claim 1, wherein downloading resources comprises downloading resources that are utilized to render individual markup documents.

7. The method of claim 1, wherein downloading resources associated with the installed application and downloading resources that have been updated are performed without having an associated user navigate to a location to obtain the resources.

8. One or more computer-readable storage media embodying computer readable instructions, which, when executed, implement two processes comprising:
an application deployment process (302) configured to:
obtain and read an installable application package (306) that includes an application manifest (308), the application manifest being utilized to download resources that are utilized by an associated installable application;
store downloaded resources in an application cache (120) for use in online and offline scenarios; and
an application execution process (304) configured to:
when the installable application is installed, utilize the application cache to retrieve resources that are utilized by the installed application;
check for a remotely-located updated application manifest defining application resources which are to be updated use the updated application manifest to download associated resources;
update the application cache with the downloaded associated resources; and
use the downloaded associated resources to execute the installed application,
wherein the installed application does not depend on or run in a web browser.

9. The one or more computer-readable storage media of claim 8, wherein the application deployment process and the application execution process are configured to utilize a W3C HTML5 application cache.

## Patentansprüche

1. Ein computerimplementiertes Verfahren, umfassend:
Einleiten (400) der Installation einer installierbaren Anwendung auf einer lokalen Computervorrichtung, wobei die installierbare Anwendung ein entsprechendes Anwendungspaket aufweist, wobei das Anwendungspaket ein Anwendungsmanifest beinhaltet;
wenn die installierbare Anwendung installiert ist, zugreifen auf einen Anwendungscache und verwenden des Anwendungsmanifests, um Ressourcen zu bestimmen, die von der installierten Anwendung verwendet werden;
Herunterladen (402) von Ressourcen, die dem Anwendungsmanifest zugeordnet sind, das der installierten Anwendung zugeordnet ist, für die die Anwendungsinstallation eingeleitet wurde;
Speichern heruntergeladener Ressourcen im Anwendungs-Cache zur Verwendung in Online- und Offline-Szenarien;
Bestimmen (406) der Existenz eines entfernt aktualisierten Anwendungsmanifests, das Anwendungsressourcen definiert, die aktualisiert werden sollen;
Herunterladen (412) von Ressourcen, die unter Verwendung des entfernten Anwendungsmanifests aktualisiert wurden, für die installierte Anwendung; und
Verwenden von (414) heruntergeladenen Ressourcen, um die installierte Anwendung auszuführen;
wobei die installierte Anwendung nicht von einem Webbrowser abhängt oder in einem Webbrowser ausgeführt wird.

2. Verfahren nach Anspruch 1, worin das Herunterladen von Ressourcen die Verwendung einer W3C HTMLs-Anwendungscache-Implementierung umfasst.

3. Verfahren nach Anspruch 1, wobei das Herunterladen die Verwendung einer Anwendungsmanifestdatei umfasst, die von einer URI im Anwendungsmanifest referenziert wird.

4. Verfahren nach Anspruch 1, worin die Ressourcen konfiguriert sind, um in Online- und Offline-Szenarien verwendet zu werden.

5. Verfahren nach Anspruch 1, worin das Herunterladen von Ressourcen das Herunterladen eines oder mehrerer Markup-Dokumente umfasst.

6. Verfahren nach Anspruch 1, worin das Herunterladen von Ressourcen das Herunterladen von Ressourcen umfasst, die zum Rendern einzelner Markup-Dokumente verwendet werden.

7. Verfahren nach Anspruch 1, worin das Herunterladen von Ressourcen, die mit der installierten Anwendung verbunden sind, und das Herunterladen von Ressourcen, die aktualisiert wurden, durchgeführt werden, ohne dass ein zugehöriger Benutzer zu einem Ort navigiert, um die Ressourcen zu erhalten.

8. Ein oder mehrere computerlesbare Speichermedien, die computerlesbare Anweisungen verkörpern, die, wenn sie ausgeführt werden, zwei Prozesse implementieren, die umfassen:
einen Anwendungsbereitstellungsprozess (302), der konfiguriert ist, zum:
Erhalten und Lesen eines installierbaren Anwendungspakets (306), das ein Anwendungsmanifest (308) beinhaltet, wobei das Anwendungsmanifest zum Herunterladen von Ressourcen verwendet wird, die von einer zugehörigen installierbaren Anwendung verwendet werden;
Speichern heruntergeladener Ressourcen in einem Anwendungs-Cache (120) zur Verwendung in Online- und Offline-Szenarien; und
einen Anwendungsausführungsprozess (304), der konfiguriert ist, zum:
Wenn die installierbare Anwendung installiert ist, Verwenden des Anwendungs-Cache, um Ressourcen abzurufen, die von der installierten Anwendung verwendet werden;
Prüfen auf ein entferntes, aktualisiertes Anwendungsmanifest, das Anwendungsressourcen definiert, die aktualisiert werden sollen;
Verwenden des aktualisierten Anwendungsmanifests, um die zugehörigen Ressourcen herunterzuladen;
Aktualisieren des Anwendungs-Cache mit den heruntergeladenen zugehörigen Ressourcen; und
Verwenden der heruntergeladenen zugehörigen Ressourcen, um die installierte Anwendung auszuführen,
wobei die installierte Anwendung nicht von einem Webbrowser abhängt oder in einem Webbrowser ausgeführt wird.

9. Ein oder mehrere computerlesbare Speichermedien nach Anspruch 8, worin der Anwendungsbereitstellungsprozess und der Anwendungsausführungsprozess konfiguriert sind, um einen W3C HTML5-Anwendungscache zu verwenden.

## Revendications

1. Procédé mis en oeuvre par ordinateur comprenant les étapes ci-dessous consistant à :
initier (400) l'installation d'une application installable sur un dispositif informatique local, dans lequel l'application installable dispose d'un progiciel d'application correspondant, dans lequel le progiciel d'application inclut un manifeste d'application ;
lorsque l'application installable est installée, accéder à un cache d'application et utiliser le manifeste d'application en vue de vérifier des ressources qui sont utilisées par l'application installée ;
télécharger (402) des ressources associées au manifeste d'application associé à l'application installée pour laquelle l'installation a été initiée ;
stocker des ressources téléchargées dans le cache d'application à des fins d'utilisation dans des scénarios en ligne et hors ligne ;
vérifier (406) l'existence d'un manifeste d'application mis à jour distant définissant des ressources d'application qui doivent être mises à jour ;
télécharger (412), pour l'application installée, des ressources qui ont été mises à jour en utilisant le manifeste d'application mis à jour distant ; et
utiliser (414) des ressources téléchargées en vue d'exécuter l'application installée ;
dans lequel l'application installée ne dépend pas d'un navigateur web ou ne s'exécute pas dans un navigateur web.

2. Procédé selon la revendication 1, dans lequel l'étape de téléchargement de ressources comprend l'étape consistant à utiliser une mise en oeuvre de cache d'application W3C HTML5.

3. Procédé selon la revendication 1, dans lequel l'étape de téléchargement comprend l'étape consistant à utiliser un fichier de manifeste d'application référencé par un identifiant URI dans le manifeste d'application.

4. Procédé selon la revendication 1, dans lequel les ressources sont configurées de manière à être utilisées dans des scénarios en ligne et hors ligne.

5. Procédé selon la revendication 1, dans lequel l'étape de téléchargement de ressources consiste à télécharger un ou plusieurs documents de balisage.

6. Procédé selon la revendication 1, dans lequel l'étape de téléchargement de ressources consiste à télécharge des ressources qui sont utilisées en vue de restituer des documents de balisage individuels.

7. Procédé selon la revendication 1, dans lequel l'étape de téléchargement de ressources associées à l'application installée et l'étape de téléchargement de ressources qui ont été mises à jour sont mises en oeuvre sans qu'il soit nécessaire qu'un utilisateur associé navigue vers un emplacement pour obtenir les ressources.

8. Un ou plusieurs supports de stockage lisibles par ordinateur incorporant des instructions lisibles par ordinateur, qui, lorsqu'elles sont exécutées, mettent en oeuvre deux processus comprenant :
un processus de déploiement d'application (302) configuré de manière à :
obtenir et lire un progiciel d'application installable (306) qui inclut un manifeste d'application (308), le manifeste d'application étant utilisé en vue de télécharger des ressources qui sont utilisées par une application installable associée ;
stocker des ressources téléchargées dans un cache d'application (120) à des fins d'utilisation dans des scénarios en ligne et hors ligne ; et
un processus d'exécution d'application (304) configuré de manière à :
lorsque l'application installable est installée, utiliser le cache d'application pour récupérer des ressources qui sont utilisées par l'application installée ;
vérifier la présence d'un manifeste d'application mis à jour situé à distance définissant des ressources d'application qui doivent être mises à jour ;
utiliser le manifeste d'application mis à jour pour télécharger des ressources associées ;
mettre à jour le cache d'application avec les ressources associées téléchargées ; et
utiliser les ressources associées téléchargées en vue d'exécuter l'application installée, dans laquelle l'application installée ne dépend pas d'un navigateur web ou ne s'exécute pas dans un navigateur web.

9. Un ou plusieurs supports de stockage lisibles par ordinateur selon la revendication 8, dans lesquels le processus de déploiement d'application et le processus d'exécution d'application sont configurés de manière à utiliser un cache d'application W3C HTML5.
